# EUROPÄISCHE PATENTSCHRIFT

(11) **EP 2 920 499 B1**
(45) Veröffentlichungstag und Bekanntmachung des Hinweises auf die Patenterteilung: **21.09.2016**
(21) Anmeldenummer: 13801483.2
(22) Anmeldetag: 13.11.2013
(51) Int. Cl.: F16K 31/122, F15B 15/18

(54) **VENTILVORRICHTUNG UND VERWENDUNG EINER SOLCHEN**
VALVE DEVICE AND USE OF SUCH A VALVE DEVICE
DISPOSITIF À SOUPAPE ET SON UTILISATION

(30) Priorität: 15.11.2012 DE 102012111021
(43) Veröffentlichungstag der Anmeldung: 23.09.2015
(73) Patentinhaber: Eto Magnetic GmbH, 78333 Stockach (DE)
(72) Erfinder: VINCON, Peter, 78333 Stockach (DE)
(74) Vertreter: Behrmann, Niels
(86) Internationale Anmeldenummer: PCT/EP2013/073756
(87) Internationale Veröffentlichungsnummer: WO 2014/076145

(56) Entgegenhaltungen:
- EP-A1- 0 696 682
- DE-A1- 2 050 761
- DE-A1-102007 007 297
- DE-A1-102010 042 944
- DE-C1- 4 402 647
- GB-A- 1 281 133

## Beschreibung

Die vorliegende Erfindung betrifft eine Ventilvorrichtung nach dem Oberbegriff des Hauptanspruchs, wie sie aus der DE 44 02 647 C1 bekannt ist. Eine derartige Vorrichtung, etwa realisiert als sogenanntes Absperrventil, ist als Hydraulik- oder Pneumatikventil allgemein bekannt und wird für eine Vielzahl von Anwendungsfällen eingesetzt. Ein typischer Anwendungsfall ist das (durch das Ventil gesteuerte) Sperren bzw. Öffnen eines Kühlkreislaufs in einem Kraftfahrzeug.

Derartige Anwendungen zeichnen sich dadurch aus, dass vergleichsweise große Weiten des Fluid-Strömungskanals gesperrt werden müssen, was entsprechend große Stellkräfte (durch die großen Druckwirkflächen) erfordert. Während es insbesondere im beschriebenen Kraftfahrzeugkontext üblich ist, zur Ventilbetätigung und damit zum Bewirken einer Sperr- bzw. Öffnungsbewegung des Ventilstößels, einen elektromagnetischen Aktuator zu verwenden, bedingen gleichwohl die erwähnten großen Druckwirkflächen entsprechend großdimensionierte (und damit schwere) elektromagnetische Vorrichtungen. Neben dem herstellungstechnischen Aufwand sind derartige Vorrichtungen umständlich in der Montage, besitzen einen hohen elektrischen Energieverbrauch und weisen ein (nachteilig) hohes Gewicht auf.

Aus diesem Grund ist es als aus dem Stand der Technik bekannt vorauszusetzen, für derartige oder vergleichbare Anwendungsfälle sogenannte vorgesteuerte Ventile einzusetzen, insbesondere dann, wenn es auf schnelle Schaltseiten bzw. andere Dynamikeigenschaften der Ventilvorrichtung nicht ankommt. Eine derartige Vorsteuerung würde, mittels eines sogenannten Steuerdrucks oder einer Steuerkraft, die Sperrbewegung des Ventilstößels zusätzlich unterstützen, so dass insoweit dann der eigentliche Aktuator kleiner dimensioniert werden kann. Häufig steht aber im vorgesehenen Montage- bzw. Anwendungskontext kein Steuerdruck für eine solche Vorsteuerung zur Verfügung.

Aufgabe der vorliegenden Erfindung ist es daher, eine gattungsgemäße Ventilvorrichtung, insbesondere realisiert als Absperrventil für große Nennweiten, zu flexibilisieren, dabei insbesondere eine für die Stellkraft notwendige Aktuatorik im Hinblick auf ihre Dimensionierung und einen Energieverbrauch zu optimieren und so eine Ventilvorrichtung zu schaffen, welche flexibel einsetz- und montierbar ist und eine hohe Betriebssicherheit gewährleistet, dabei gleichwohl konstruktiv einfach realisiert ist.

Die Aufgabe wird durch die Ventilvorrichtung mit den Merkmalen des Hauptanspruchs gelöst; vorteilhafte Weiterbildungen der Erfindung sind in den Unteransprüchen beschrieben. Zusätzlicher unabhängiger Schutz im Rahmen der Erfindung wird beansprucht für eine Verwendung einer solchen Ventilvorrichtung für das gesteuerte Sperren oder Öffnen eines Kühlkreislaufs in einem Kraftfahrzeug.

In erfindungsgemäß vorteilhafter Weise wird, in der Art einer Vorsteuerung, durch elektromagnetisch angetriebene Pumpenmittel das Druckfluid in einen dem Ventilstößel zugeordneten Druckraum gefördert und dort durch eine Mehrzahl von Pumphüben eines Förderkolbens der Pumpenmittel komprimiert, bis der Druck des Druckfluids im Druckraum ausreicht, um den Ventilstößel aus einer Ausgangslage in die Eingriffslage am Ventilsitz, mithin zum Bewirken etwa des Sperrzustands, zu verbringen.

Damit ist es in konstruktiv und herstellungstechnisch einfacher Weise ermöglicht, kompakt und energiesparend mit elektromagnetischen Aktuatorprinzipien realisierte Pumpenmittel zu verwenden, um den Ventilstößel durch das druckbeaufschlagte Druckfluid anzusteuern, wobei es zwar bevorzugt ist, die erfindungsgemäße Ventilvorrichtung als Hydraulikventil zu realisieren (wobei dann das Druckfluid ein geeignetes Hydraulikfluid ist), alternativ etwa aber auch ein pneumatisches Ventil- und Ventilsteuerungsprinzip realisiert sein kann.

Besonders bevorzugt ist es bei der Realisierung der Erfindung, die erfindungsgemäßen elektromagnetisch angetriebenen Pumpenmittel mit einem Hubkolben als Förderkolben zu versehen, so dass die Pumphübe als oszillierende bzw. translatorische Bewegungen des Hubkolbens dann die Kompression des Druckfluids im Druckraum bewirken. In der praktischen Dimensionierung ist es dabei wiederum weiterbildungsgemäß bevorzugt, zum Auslösen des Schaltvorgangs (z. B. Sperrvorgangs) des Ventilstößels (also dem Bewegen von der Ausgangslage in die Eingriffslage am Ventilsitz) die Mehrzahl von Pumphüben auf ca. 5 bis ca. 60 einzustellen; dies geschieht in einem hier typischerweise anzunehmenden Kontext, dass Zeiten- bzw. Dynamikanforderungen an die erfindungsgemäße Ventilvorrichtung so sind, dass eine entsprechende Oszillationszeit für den Hubkolben zur Verfügung steht.

Wiederum weiterbildungsgemäß und in ansonsten allgemein bekannter und insbesondere großserientechnisch bewährter Weise erfolgt der elektromagnetische Antrieb der Pumpenmittel im Zusammenspiel zwischen dem als Bewegungsanker wirkenden Hubkolben, welcher elektromagnetisch zusammenwirkt mit einer stationären Spuleneinheit (und zusätzlich einer entsprechend in einem Magnetkreis angebundenen stationären Jochkerneinheit), wobei dann in ansonsten bekannter Weise als Reaktion auf eine Bestromung der Spuleneinheit der Hubkolben in die gewünschte Oszillationsbewegung versetzt wird.

Für eine derartige Oszillation, also entsprechend einer kontinuierlichperiodischen Bewegung zwischen zwei Hubendpositionen entlang einer Bewegungslängsachse des Hubkolbens, ist es im Rahmen bevorzugter Weiterbildungen der Erfindung günstig und bevorzugt, zwei Signalpegel vorzusehen, zwischen welchen sich die Bestromung als Ansteuerungssignal für die Spuleneinheit bewegt, wobei weiterbildungsgemäß beide Signalpegel von null verschieden sind. Dies führt dazu, dass während des Ansteuerungsbetriebs der Hubkolben die definierten Hubendpositionen außerhalb mindestens eines physischen Anschlags der Hubkolbenpumpe einnimmt, so dass, wiederum weiterbildungsgemäß und im Weiteren zu erläutern, gezielte Betriebszustände etwa für einen Stromausfall od. dgl. angenommen werden können.

Zusätzlich weiterbildungsgemäß ist es nämlich im Rahmen der vorliegenden Erfindung vorgesehen, den Hubkolben nicht nur gegen eine Rückstellkraft einer geeignet an den Hubkolben angreifenden Federeinheit zu betreiben, auch würde diese Federeinheit, für den Fall eines unbestromten Zustands (und damit auch für einen Fall eines Stromausfalls od. dgl.) dafür sorgen, dass durch mechanische Federwirkung der Hubkolben in eine mechanische Anschlagposition des Hubkolbens bewegt wird. Da jedoch, durch einen Normalbetrieb zwischen dem ersten und dem zweiten, jeweils von null verschiedenen Signalpegel der Hubkolben in diesem bestromten Betrieb diesen Endzustand nicht erreicht, kann diesem (unbestromten) Anschlagzustand in der weiterbildungsgemäß vorgesehenen Weise eine Vorrichtung zum gesteuerten Entlüften des Druckraums (für den Ventilstößel) zugeordnet sein und in der Anschlagposition durch den Hubkolben betätigt werden. In der Art eines sicheren Betriebszustands ("fail safe") beim Stromausfall führt dies dann dazu, dass, unabhängig von einem aktuellen Druck- und/oder Sperrzustand des Ventilstößels, stets gewährleistet ist, dass im Fall des Stromausfalls (bzw. auch im Ausschaltzustand) das Ventil in der Ausgangslage steht (wobei zusätzlich vorteilhaft und weiterbildungsgemäß auch der Ventilstößel mit einer eine entsprechende Rückstellkraft in Richtung auf die Ausgangslage bewirkenden Rückstellfeder zusammenwirkt).

Insbesondere die weiterbildungsgemäß bevorzugte Verwendung der Erfindung in einem Kühlkreislauf od. dgl. hydrauliktauglichem Fluidkreislauf ermöglicht eine weitere vorteilhafte Ausgestaltung der Erfindung, nämlich dass das erfindungsgemäße Druckfluid unmittelbar aus dem Fluid-Strömungskanal (und insoweit aus dem durch das erfindungsgemäße Ventil zu schaltenden Fluid) gewonnen wird. Konkret ist weiterbildungsgemäß vorgesehen, dass den erfindungsgemäß elektromagnetisch angetriebenen Pumpenmitteln ein Zufluss für das Druckfluid zugeordnet ist, welcher zum Fluidströmungskanal geöffnet ist, so dass für die Mehrzahl von Pumphüben das jeweils in den Druckraum gebrachte und dort komprimierte Druckfluid aus dem im Fluid-Strömungskanal strömenden Fluid gewonnen ist.

Eine weitere vorteilhafte Ausführungsform der Erfindung, welche insbesondere im praktischen Betrieb nützlich ist, sieht vor, dass dem dem Ventilstößel zugeordneten Druckraum ein Überdruckventil zugeordnet ist, welches als Reaktion auf das Überschreiten eines durch das Ventil vorbestimmten Druckschwellwerts öffnet und Druckfluid zurück in den Fluid-Strömungskanal auslässt, bis wiederum der Druckschwellwert erreicht ist. Durch eine derartige Maßnahme ist eine Ansteuerung der erfindungsgemäßen Pumpenmittel vereinfacht, denn damit kann auch in einem aktivierten bzw. Sperr-Zustand des Ventilstößels ein kontinuierliches Bewegen des Hubkolbens (ggf. mit einer reduzierten Oszillationsfrequenz) erfolgen, wobei dann das Druckbegrenzungsventil einen Überdruck bzw. eine ansonsten mögliche Beschädigung verhindert; da im praktischen Betrieb ohnehin Leckageeffekte, etwa bedingt durch Undichtigkeiten od. dgl., auftreten, müsste ansonsten in wesentlich komplexerer Weise, etwa als Reaktion auf eine konkrete Druckmessung, eine isolierte Pumpenaktivierung auch in einem Eingriffszustand erfolgen.

Während zudem im vorliegenden Kontext (exemplarisch) von einem Sperrzustand in der Eingriffslage gesprochen wurde, ist es für den Fachmann offensichtlich, dass die vorliegende Erfindung gleichermaßen, etwa als stromlos geschlossenes Ventilprinzip, einen gezielt angesteuerten Öffnungszustand in der Eingriffslage umfasst, so dass die vorliegende Erfindung auf eine Vielzahl von geeigneten Sperr- bzw. Öffnungsprinzipien, je nach Einrichtung des Ventilsitzes bzw. der Eingriffslage, angewendet werden kann.

In Ergebnis ermöglicht es die vorliegende Erfindung damit in überraschend einfacher und eleganter Weise, die (vor allem auch unter Gesichtspunkten einer großserientauglichen Fertigung, einer hohen Betriebssicherheit und kompakten Abmessungen) günstige Eigenschaften elektromagnetischer Aktuatorik und damit realisierter Pumpenmittel zu verbinden mit einer (etwa hydraulisch oder pneumatisch betriebenen) Ventilvorrichtung, deren Ventilstößel, als Alternative zu einem ansonsten wesentlich größer zu dimensionierenden Antrieb, das Druckfluid mit einer Mehrzahl von Pumphüben des Förderkolbens in den Druckraum fördert..

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine schematische Schnittansicht durch die erfindungsgemäße Ventilvorrichtung gemäß einer bevorzugten Realisierungsform, bei welcher eine elektromagnetisch angetriebene Hubkolbenpumpe aus dem Ventil-Fluid-Strömungskanal bezogenes Fluid als Druckfluid für die Bewegung des Ventilstößels verwendet;
- Fig. 2:: eine Darstellung analog Fig. 1, jedoch in einem gegenüber der Ausgangslage des Ventilstößels der Fig. 1 in die Eingriffslage verbrachten Ventilstößel und
- Fig. 3:: eine Darstellung analog Fig. 1, Fig. 2 mit einem unbestromten Zustand der Spulenmittel und einem zugehörigen Entlüftungsmittel für den Druckraum betätigenden Endanschlag des Hubkolbens.

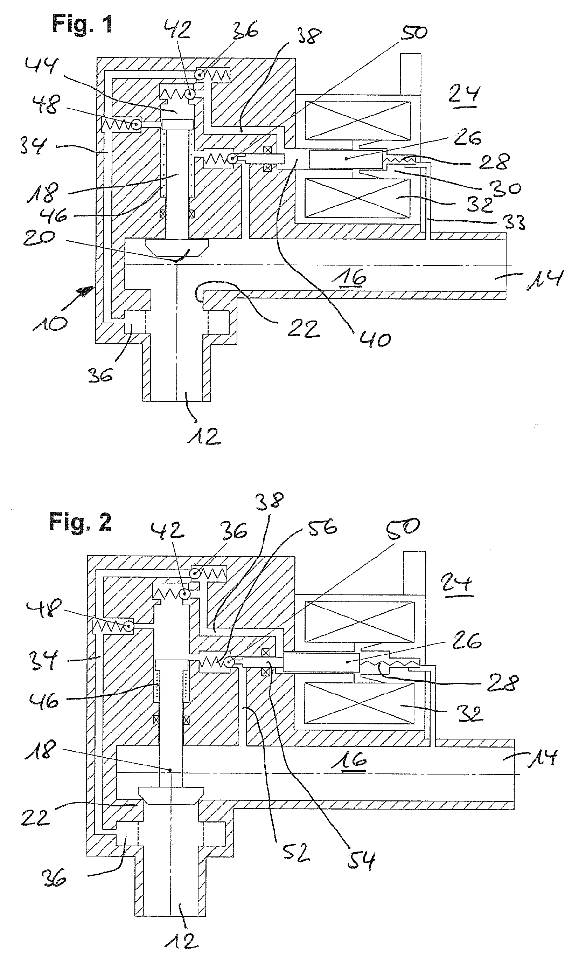

Die Fig. 1 zeigt in der schematischen seitlichen Schnittansicht die Ventilvorrichtung einer bevorzugten Ausführungsform. In einem Ventilgehäuse 10 erstreckt sich zwischen einem nach unten gerichteten Einlass 12 und einem horizontalen Auslass 14 ein Fluid-Strömungskanal 16 für Kühlmittel eines mit diesem Ventil zu schaltenden Kühlkreislaufs eines Kraftfahrzeugs. Zu diesem Zweck wird in nachfolgend im Detail zu beschreibender Weise ein Ventilstößel 18 mit einem ansitzenden verbreiterten Dichtkörper 20 auf einen im Knickbereich des Fluid-Strömungskanals 16 gebildeten Ventilssitz 22 gebracht (Eingriffslage) und bewirkt damit eine Unterbrechung einer Fluidströmung im Fluid-Strömungskanal.

Konkret erfolgt die (in den Figuren abwärts gerichtete) Stößelbewegung aus der in Fig. 1 gezeigten Ausgangslage in die Eingrifflage am Ventilsitz durch Wirkung einer am Gehäuse 10 ansitzenden Hubkolbenpumpe 24, deren Hubkolben 26, vorgespannt gegen eine Rückstell-Druckfeder 28, in der Art eines Ankers eine translatorische Längsbewegung gegenüber einem einen stationären Kernbereich aufweisenden Statorabschnitt 30 durchführt.

Konkret erfolgt in ansonsten bekannter Weise die Translationsbewegung des Hubkolbens 26 als Reaktion auf eine Bestromung stationärer Spulenmittel 32, wobei in dem hier vorliegenden Ausführungsbeispiel zum Erzeugen einer oszillierenden Translationsbewegung des Hubkolbens 26 die Ansteuerung der Spuleneinheit 32 mit einem Wechselsignal erfolgt, welches (bevorzugt periodisch) zwischen einem unteren und einem oberen Signalpegel schwankt. So verdeutlicht etwa die in Fig. 1 gezeigte Hubkolbenposition einen Bestromungszustand mit einem ersten Signalpegel, dem gegenüber der in Fig. 2 gezeigten Kolbenzustand einen Bestromungszustand mit einem zweiten (gleichermaßen von null verschiedenen) Signalpegel, bei gegenüber der Fig. 1 entspannterer (jedoch nicht vollständig entspannter) Druckfeder 28.

Dieser Oszillationsbetrieb des Hubkolbens 26 bewirkt nun in der Art eines Hydraulikantriebs ein Absenken des Ventilstößels 18 dadurch, dass durch einen Ansaugkanal 34 mit vorgeschalteten Filtermitteln 36 aus dem Einlassbereich 12 des Fluid-Strömungskanals 16 gewonnenes Kühlmittel als Hydraulikfluid über ein erstes Sperrventil 36 (als Einlassventil für dieses Druckfluid) und einen Verbindungskanal 38 in einen Kompressionsraum 40 der Pumpeneinheit 24 gebracht wird. Ein nunmehr erfolgender Pumphub des Hubkolbens 26 (in der Figurenebene der Fig. 1 in Richtung links) drückt dann das so angesaugte Fluidquantum (wiederum über den Kanal 38) durch ein zweites Sperrventil 42 in einen Druckraum 44 für den Stößel 18 (bei dieser Hubbewegung sperrt das Ventil 36, während das Ventil 42 insoweit als Auslassventil für das Druckfluid wirkend, den Eintritt in den Druckraum 44 ermöglicht).

Nachfolgende Pumphübe des oszillierenden Hubkolbens bringen weiteres Druckfluid in den (querschnittlich gegenüber der Leitung 38 verbreiterten) Druckraum 44 und erhöhen den dort auf den Stößel 18 wirkenden Druck.

Eine typische Auslegung bzw. Dimensionierung des Ausführungsbeispiels sieht vor, dass ca. 20 derartige Pumphübe erforderlich sind, um, auch gegen eine Rückstellkraft einer den Ventilstößel 18 in die Ausgangslage der Fig. 1 vorspannenden Rückstell-Spiralfeder 46, den Ventilstößel in die Abwärtsrichtung zu bringen und so das Ventil zu schalten.

Einen derartigen Schaltzustand zeigt die Fig. 2: Die Stößeleinheit 18 mit ihrem endseitigen Verschluss- bzw. Dichtkörper 20 ruht auf dem Ventilsitz 22 und unterbricht somit den Fluid-Strömungskanal 16 zwischen Einlass 12 und Auslass 14.

Da etwa durch Undichtigkeiten oder andere Leckage-Effekte der Fluiddruck im Druckraum 44 kontinuierlich abnimmt (und die im Sperrzustand der Fig. 2 komprimierte Rückstellfeder 46 eine entgegenwirkende Druckkraft ausübt) ist es zum Halten dieses Sperrzustandes erforderlich, kontinuierlich, jedoch mit verringerter Oszillations- bzw. Pumpfrequenz des Hubkolbens 26, weiteres Druckfluid auf die vorbeschriebene Weise in den Druckraum 44 zu bringen. Damit dort kein schädlicher Überdruck entsteht, sorgt ein (zumindest im Sperrzustand der Fig. 2 freiliegendes) Überdruckventil 48 dafür, dass beim Erreichen bzw. Überschreiten eines durch das Überdruckventil 48 vorgegebenen Druckschwellwerts ein Fluiddruck im Druckraum 44 über die Leitung 34 zum Fluid-Strömungskanal 16 entspannt wird. Vorteilhaft hat dies die Wirkung, dass auch ohne konkrete Druckerfassung bzw. Druckmessung im Druckraum 44 die Pumpeneinheit 24 (kontinuierlich, bei vorteilhaft reduzierter Druckfrequenz) weiter betrieben werden kann und mittels des Überdrückventils 48 eine Druckhebelung im Druckraum 44, welche den Ventilstößel in der Eingriffslage (Verschlusszustand der Fig. 2) hält, erreicht werden kann.

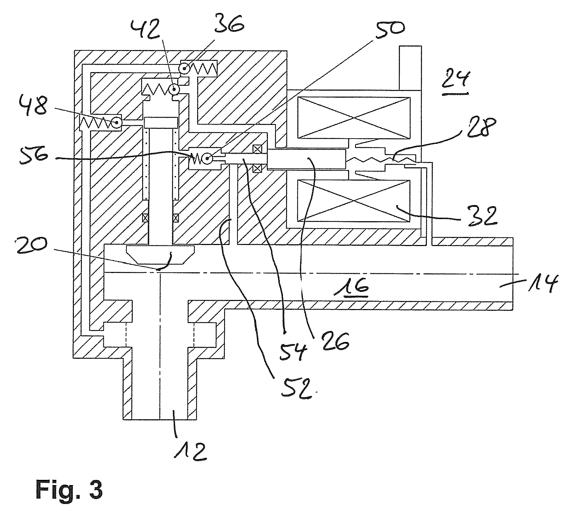

Sobald dann jedoch, vergleiche Fig. 3, die Bestromung der Spulenmittel 32 beendet wird, endet gleichermaßen die Druckbeaufschlagung der Stößeleinheit 18, wobei zu diesem Zweck vorteilhaft ein Entlüftungsventil 50 wirkt. Dieses stellt über einen Entlüftungskanal 52 eine geschaltete Verbindung zum Fluid-Strömungskanal 16 her und wird durch einen Entlüftungsstößel 54 geschaltet, welcher, in der in Fig. 3 gezeigten linken Anschlagposition (bei unbestromten Spulenmitteln 32) durch den Hubkolben 26 betätigt wird. Entsprechend fällt der Druck im Druckraum 44 durch diesen Öffnungsvorgang ("Entlüftung") schnell auf den im Strömungskanal 16 geltenden Druck, so dass, durch Wirkung der Rückstellfeder 46, der Ventilstößel 8 zurück in die Ausgangslage der Fig. 1 bzw. der Fig. 3 verbracht wird. Dabei zeigt sich die günstige Wirkung der Ansteuerung der Hubkolbenpumpe durch ein Wechselsignal zwischen einem oberen und einem unteren Signalpegel, welcher jedoch stets von null verschieden ist: Im Bestromungsbetrieb erreicht dadurch der Hubkolben 26 keine Betätigung des Entlüftungsventils 50 (selbst bei dem in Fig. 2 gezeigten, bestromten Zustand des Hubkolbens erfolgt noch keine Öffnung des Entlüftungsventils 50, dies geschieht erst bei vollständig deaktiviertem Spulenstrom, siehe Fig. 3, zu welchem die Hubkolben-Feder 28 die Hubkolben 26 gegen den Ventilstößel 54 drückt und damit das Ventil 50 öffnet).

In der Dimensionierung dieser Komponenten ist dabei die Feder 28 entsprechend stärker als eine (insoweit entgegenwirkende) Ventilfeder 56 des Entlüftungsventils 50 ausgebildet.

Während das vorliegende Ausführungsbeispiel der Fig. 1 bis 3, für die Großserienfertigung günstig mit einem Gehäuse 10 aus einem Kunststoffmaterial realisiert und für den Kühlkreislauf eines Kraftfahrzeugs eingerichtet, eine bevorzugte und günstige Anwendung der Erfindung offenbart, ist gleichwohl die vorliegende Erfindung nicht auf eine solche Realisierung beschränkt.

Vielmehr eignet sich die vorliegende Erfindung für beliebige andere Anwendungsgebiete, insbesondere auch im Hinblick auf zu stellende bzw. zu verschließende Druck- bzw. Leitungsquerschnitte, eine stromlos offene oder eine stromlos geschlossene Konfiguration oder völlig andere Ventilprinzipien.

Entsprechend liegt es im Rahmen fachmännischen Könnens, bei der Einrichtung und Parametrisierung einer solchen Vorrichtung, neben den geometrischen Abmessungen, auch die Betriebsparameter, wie etwa ein geeignetes Volumen des Kompressionsraums 40 gegenüber dem Druckraum 44, ein verhältniswirksamer Leitungsquerschnitt für die Hydraulikwirkung (alternativ ist auch eine Pneumatikrealisierung möglich), oder aber das Bewegungsverhalten des Hubkolbens 26 geeignet einzustellen. Während etwa im vorliegenden Ausführungsbeispiel typische Oszillationsfrequenzen des Hubkolbens 26 im Bereich zwischen ca. 0,5 Hz und 5 Hz liegen, bei typischerweise ca. 20 - 50 Oszillationshüben zum Erreichen einer Stößelbewegung 18, ist auch die vorliegende Erfindung nicht auf diese Parameter beschränkt.

Auch wenn das vorliegende Ausführungsbeispiel in effizienter Art das Nutzfluid im Strömungskanal 16, also z.B. etwa das zu schaltende Kühlmittel, gleichermaßen als Hydraulikfluid zum Bewirken des erfindungsgemäßen Stellverhaltens genutzt hat, ist es gleichermaßen möglich und von der Erfindung umfasst, für den Hydraulikkreis gesondertes Hydraulikfluid etwa aus einem geeignet vorzusehenden Tank, zu bewegen und zu komprimieren. Zu diesem Zweck würden dann die vorbeschriebenen Leitungen bzw. Öffnungen vom Fluid-Strömungskanal 16, nämlich der Ansaugkanal 34 mit dem Filter 36, ferner der Entlüftungskanal 52 sowie ein der Pumpeneinheit 24 (bzw. dem Bewegungsraum für den Hubkolben 26 zugeordneter Leckagekanal 33, jeweils mit einem solchen separaten und vom Fluid-Strömungskanal 16 getrennten Hydraulik-Fluidbehälter zu verbinden sein.

## Patentansprüche

1. Ventilvorrichtung mit
einem ein gesteuertes Öffnen oder Sperren eines Fluid-Strömungskanals (16) in einer Eingriffslage auf einem Ventilsitz (22) bewirkenden Ventilstößel (18), der als Reaktion auf eine Druckbeaufschlagung mit einem Druckfluid von einer Ausgangslage in die Eingriffslage verbringbar ist,
**dadurch gekennzeichnet, dass**
das aus dem Fluid-Strömungskanal bezogene Druckfluid durch elektromagnetisch angetriebene Pumpenmittel (24) in einen dem Ventilstößel zugeordneten Druckraum (44) so gefördert wird, dass die Druckbeaufschlagung zum Antreiben des Ventilstößels durch eine Mehrzahl von Pumphüben der einen Förderkolben (26), insbesondere Hubkolben, aufweisenden Pumpenmittel erfolgt.

2. Vorrichtung nach Anspruch 1,
**dadurch gekennzeichnet, dass**
die Pumpenmittel einen eine translatorisch oszillierende Bewegung ausführenden Hubkolben (26) aufweisen, der als Anker von einer stationär vorgesehenen und mit einer Bestromung ansteuerbaren Spuleneinheit (32) angetrieben wird.

3. Vorrichtung nach Anspruch 2,
**dadurch gekennzeichnet, dass**
die Bestromung einen ersten und einen zweiten, bevorzugt jeweils vom unbestromten Zustand verschiedenen Signalpegel zum Definieren des Pumpenhubes aufweist und eine Frequenz des Signalwechsels zwischen dem ersten und dem zweiten Signalpegel eine Oszillationsfrequenz der Hubkolbenkolbenbewegung bestimmt.

4. Vorrichtung nach Anspruch 2 oder 3,
**dadurch gekennzeichnet, dass**
der Ventilstößel (18) gegen eine Rückstellkraft von Rückstellfedermitteln (48) in Richtung auf die Ausgangslage vorgespannt ist und dem Druckraum Entlüftungsmittel (50) so zugeordnet und eingerichtet sind, dass in einem unbestromten Zustand der Spuleneinheit das Druckfluid im Druckraum, insbesondere zum Strömungskanal, entspannt wird.

5. Vorrichtung nach einem der Ansprüche 1 bis 4,
**dadurch gekennzeichnet, dass**
die Entlüftungsmittel (50) als Reaktion auf eine Stellposition des Hubkolbens in dem unbestromten Zustand betätigt werden, insbesondere unmittelbar oder über ein mechanisches Verbindungselement (54) mit dem Hubkolben zusammenwirken.

6. Vorrichtung nach einem der Ansprüche 1 bis 5,
**dadurch gekennzeichnet, dass**
den Pumpenmitteln ein Zufluss (34) für das Druckfluid zugeordnet ist.

7. Vorrichtung nach Anspruch 6,
**dadurch gekennzeichnet, dass**
der Zufluss zum Fluid-Strömungskanal (16) öffenbar ist.

8. Vorrichtung nach einem der Ansprüche 1 bis 7,
**dadurch gekennzeichnet, dass**
dem Druckraum ein Überdruckventil (48) mit einem vorbestimmten Öffnungsschwellwert so zugeordnet ist, dass auch in der Eingriffslage die Pumpenhübe erfolgen können.

9. Vorrichtung nach einem der Ansprüche 1 bis 8,
**dadurch gekennzeichnet, dass**
den Pumpenmitteln zugeordnete Steuermittel so ausgebildet und/oder eingerichtet sind, dass das Antreiben des Ventilstößels als Reaktion auf mindestens 10, bevorzugt mindestens 20, weiter bevorzugt mindestens 30 Pumphübe erfolgt.

10. Verwendung der Ventilvorrichtung nach einem der Ansprüche 1 bis 9 zum gesteuerten Sperren oder Öffnen eines Kühlkreislaufs in einem Kraftfahrzeug.

## Claims

1. A valve device having
a valve tappet (18) effecting a controlled opening or closing of a fluid flow channel (16) in an engagement position on a valve seat (22), which valve tappet can be brought from an initial position into the engagement position as a reaction to pressure loading with a pressure fluid,
**characterised in that**
the pressure fluid drawn from the fluid flow channel by means of electromagnetically driven pump means (24) is conveyed into a pressure chamber (44) assigned to the valve tappet in such a manner that the pressure loading for driving the valve tappet takes place by means of a plurality of pump strokes of the pump means having a conveying piston (26), particularly a reciprocating piston.

2. The device according to Claim 1,
**characterised in that**
the pump means have a reciprocating piston (26) executing a translationally oscillating movement, which is driven as an armature by a stationarily provided coil unit (32) that can be controlled by means of current supply.

3. The device according to Claim 2,
**characterised in that**
the current supply has a first and a second signal level, which are preferably different from the unpowered state, for defining the pump stroke and a frequency of a signal transition between the first and the second signal level determines an oscillation frequency of the reciprocating piston movement.

4. The device according to Claim 2 or 3,
**characterised in that**
the valve tappet (18) is pretensioned against a restoring force of return spring means (48) in the direction towards the initial position and ventilating means (50) are assigned to the pressure chamber and set up in such a manner that in an unpowered state of the coil unit, the pressure fluid in the pressure chamber, particularly for the flow channel, is relieved.

5. The device according to one of Claims 1 to 4,
**characterised in that**
the ventilating means (50) are actuated as a reaction to a setting position of the reciprocating piston in the unpowered state, particularly interact with the reciprocating piston directly or by means of a mechanical connecting element (54).

6. The device according to one of Claims 1 to 5,
**characterised in that**
a supply (34) for the pressure fluid is assigned to the pump means.

7. The device according to Claim 6,
**characterised in that**
the supply for the fluid flow channel (16) can be opened.

8. The device according to one of Claims 1 to 7,
**characterised in that**
a pressure relief valve (48) having a predetermined opening threshold value is assigned to the pressure chamber in such a manner that the pump strokes can also take place in the engagement position.

9. The device according to one of Claims 1 to 8,
**characterised in that**
the control means assigned to the pump means are constructed and/or set up in such a manner that the driving of the valve tappet takes place as a reaction to at least 10, preferably at least 20, further preferably at least 30 pump strokes.

10. A use of the valve device according to one of Claims 1 to 9, for the controlled closing or opening of a cooling circuit in a motor vehicle.

## Revendications

1. Dispositif à soupape avec un poussoir de soupape (18) actionnant une ouverture ou fermeture commandée d'un canal d'écoulement de fluide (16) dans une position d'engagement sur un siège de soupape (22), qui peut être amené d'une position initiale à la position d'engagement avec un fluide sous pression en tant que réaction à une pressurisation, **caractérisé en ce que** le fluide sous pression venant du canal d'écoulement de fluide est transporté par des moyens de pompage (24) à entraînement électromagnétique dans un espace sous pression (44) affecté au poussoir de soupape de telle manière que la pressurisation destinée à entraîner le poussoir de soupape a lieu par une pluralité de courses de pompage des moyens de pompage comportant un piston de refoulement (26), en particulier un piston alternatif.

2. Dispositif selon la revendication 1, **caractérisé en ce que** les moyens de pompage comportent un piston alternatif (26) exécutant un mouvement oscillant de façon translatoire, qui est entraîné en tant qu'induit par une unité de bobine (32) prévue de façon stationnaire et pouvant être commandée avec une alimentation en courant.

3. Dispositif selon la revendication 2, **caractérisé en ce que** l'alimentation en courant comporte un premier et un deuxième niveau de signaux, de préférence respectivement différents de l'état non alimenté pour définir la course de pompage et une fréquence de changement de signaux entre le premier et le deuxième niveau de signaux détermine une fréquence d'oscillation du mouvement de piston alternatif.

4. Dispositif selon la revendication 2 ou 3, **caractérisé en ce que** le poussoir de soupape (18) est précontraint contre une force de rappel des moyens à ressort de rappel (48) en direction de la position initiale et des moyens d'aération (50) sont agencés et affectés à l'espace sous pression de telle manière que dans un état non alimenté en courant de l'unité de bobine, le fluide sous pression dans l'espace sous pression, est relâché, en particulier vers le canal d'écoulement.

5. Dispositif selon l'une quelconque des revendications 1 à 4, **caractérisé en ce que** les moyens d'aération (50) sont actionnés à l'état non alimenté en courant en tant que réaction à une position de réglage du piston alternatif, et coopèrent en particulier directement ou par le biais d'un élément de liaison mécanique (54) avec le piston alternatif.

6. Dispositif selon l'une quelconque des revendications 1 à 5, **caractérisé en ce qu'**un conduit d'arrivée (34) pour le fluide sous pression est affecté aux moyens de pompage.

7. Dispositif selon la revendication 6, **caractérisé en ce que** le conduit d'arrivée vers le canal d'écoulement de fluide (16) peut être ouvert.

8. Dispositif selon l'une quelconque des revendications 1 à 7, **caractérisé en ce qu'**une soupape de surpression (48) avec une valeur seuil d'ouverture prédéfinie est affectée à l'espace sous pression de telle manière que les courses de pompage peuvent également avoir lieu dans la position d'engagement.

9. Dispositif selon l'une quelconque des revendications 1 à 8, **caractérisé en ce que** des moyens de commande affectés aux moyens de pompage sont constitués et/ou agencés de telle manière que l'entraînement du poussoir de soupape a lieu en réaction à au moins 10, de préférence au moins 20, encore plus de préférence à au moins 30 courses de pompage.

10. Utilisation du dispositif à soupape selon l'une quelconque des revendications 1 à 9 pour la fermeture ou l'ouverture commandée d'un circuit de refroidissement dans un véhicule automobile.
